# EUROPÄISCHE PATENTANMELDUNG

(11) **EP 3 623 415 A2**
(43) Veröffentlichungstag der Anmeldung: **18.03.2020**
(21) Anmeldenummer: 19197340.3
(22) Anmeldetag: 13.09.2019
(51) Int. Cl.: C08J 7/12, B29C 35/02, B29C 35/08, B29C 61/02, B32B 27/20, C09J 7/22, C09J 7/30

(54) **SCHRUMPFFOLIE, SCHRUMPFSCHLAUCH, SYSTEM UND VERFAHREN ZUM BETRIEB SOLCH EINES SYSTEMS**

(30) Priorität: 13.09.2018 DE 102018122448
(71) Anmelder: Yazaki Systems Technologies GmbH, 93059 Regensburg (DE)
(72) Erfinder: von Knorre, Dietrich, 27777 Ganderkesee (DE)
(74) Vertreter: Patentanwaltskanzlei WILHELM & BECK

(57) **Zusammenfassung**

Die Erfindung betrifft eine Schrumpffolie, einen Schumpfschlauch, ein System und ein Verfahren zum Betrieb solch eines Systems, wobei die Schrumpffolie eine Schicht aufweist, wobei sich die Schicht zwischen einer ersten Seitenfläche und einer zweiten Seitenfläche erstreckt, wobei die Schicht ein erstes Matrixmaterial und wenigstens ein in das erste Matrixmaterial eingebettetes erstes Partikelmaterial aufweist, wobei das erste Partikelmaterial ausgebildet ist, eine über die erste Seitenfläche in die Schicht einleitbare elektromagnetische Strahlung zur Erwärmung des ersten Matrixmaterials oberhalb einer Schrumpftemperatur zu absorbieren, wobei eine erste Partikelkonzentration des ersten Partikelmaterials in dem ersten Matrixmaterial zwischen der ersten Seitenfläche und der zweiten Seitenfläche zunimmt.

## Beschreibung

Die Erfindung betrifft eine Schrumpffolie gemäß Patentanspruch 1 und 7, einen Schrumpfschlauch gemäß Patentanspruch 13, ein System gemäß Patentanspruch 14 und ein Verfahren zum Betrieb solch eines Systems gemäß Patentanspruch 15.

Diese Patentanmeldung beansprucht die Priorität der deutschen Patentanmeldung 10 2018 122 448.6, deren Offenbarungsgehalt hiermit durch Rückbezug aufgenommen wird.

Aus DE 103 53 107 A1 ist ein Schrumpfschlauch, bzw. Schrumpfschlauchstück aus einem thermoplastischen Kunststoffmaterial mit einer Innenhülse bekannt, wobei die Innenhülse von dem Schrumpfschlauch umgeben ist und an wenigstens einer Stelle im Schrumpfschlauch fixiert ist.

Es ist Aufgabe der Erfindung, eine verbesserte Schrumpffolie, einen verbesserten Schrumpfschlauch, ein verbessertes System und ein verbessertes Verfahren zur Herstellung solch einer Schrumpffolie bereitzustellen.

Diese Aufgabe wird mittels einer Schrumpffolie gemäß Patentanspruch 1 und 7, einem Schrumpfschlauch gemäß Patentanspruch 13, einem System gemäß Patentanspruch 14 und einem Verfahren gemäß Patentanspruch 15 gelöst. Vorteilhafte Ausführungsformen sind in den abhängigen Ansprüchen angegeben.

Es wurde erkannt, dass eine verbesserte Schrumpffolie dadurch bereitgestellt werden kann, dass die Schrumpffolie eine Schicht aufweist, wobei sich die Schicht zwischen einer ersten Seitenfläche und einer zweiten Seitenfläche erstreckt.

Die Schicht weist ein erstes Matrixmaterial und ein in das erste Matrixmaterial eingebettetes erstes Partikelmaterial auf. Das erste Partikelmaterial ist ausgebildet, eine über die erste Seitenfläche in die Schicht einleitbare elektromagnetische Strahlung zur Erwärmung des ersten Matrixmaterials oberhalb einer Schrumpftemperatur zu absorbieren. Eine erste Partikelkonzentration des ersten Partikelmaterials in dem ersten Matrixmaterial ist an der ersten Seitenfläche unterschiedlich zu der zweiten Seitenfläche.

Diese Ausgestaltung hat den Vorteil, dass die Abschwächung der elektromagnetischen Strahlung mit zunehmender Eindringtiefe in der Schicht durch die unterschiedliche erste Partikelkonzentration des ersten Partikelmaterials in dem ersten Matrixmaterial ausgeglichen wird. Dadurch weist die Schrumpffolie ein Temperaturprofil bei der Bestrahlung auf, das durch die Partikelkonzentration vordefiniert ist. Insbesondere kann das erste Matrixmaterial besonders gleichmäßig erwärmt werden, sodass das Temperaturprofil ebenso gleichmäßig ist und Hot-Spots vermieden werden.

Das hat den Vorteil, dass sich die Wärme nicht nur in oberflächennahe Bereiche einkoppelt, sondern in den gesamten Querschnitt der Schrumpffolie, sodass das erste Matrixmaterial gleichmäßig schrumpft. Somit kann die Schrumpffolie sehr schnell erwärmt werden. Das führt zu sehr schnellen Schrumpfprozessen, sodass Taktzeiten in der Produktion von Kabelbäumen. Außerdem wird weniger Energie zum Schrumpfen benötigt der Schrumpffolie, da die meiste Energie direkt der Erwärmung dient. Die Schrumpffolie hat beim Aufbau der Erwärmung weniger Zeit Energie ungenutzt abzustrahlen. Ferner wird eine lokale Übertemperatur des ersten Matrixmaterials, insbesondere an der ersten Seitenfläche, das zu dauerhafter Beschädigung des ersten Matrixmaterials führen kann, vermieden.

In einer weiteren Ausführungsform nimmt die erste Partikelkonzentration des ersten Partikelmaterials in dem ersten Matrixmaterial von der ersten Seitenfläche hin zu der zweiten Seitenfläche zu.

Vorteilhafterweise nimmt die erste Partikelkonzentration des ersten Partikelmaterials in dem ersten Matrixmaterial von der ersten Seitenfläche hin zu der zweiten Seitenfläche stetig zu. Die Zunahme der ersten Partikelkonzentration kann eine vordefinierte Funktion abbilden. So kann die vordefinierte Funktion eine e-Funktion sein. Dadurch weist die Schrumpffolie bei Bestrahlung ein konstantes vordefiniertes Temperaturprofil auf.

In einer weiteren Ausführungsform nimmt eine spezifische Absorptionsrate der über die erste Seitenfläche in die Schicht einleitbaren elektromagnetischen Strahlung in der Schicht von der ersten Seitenfläche zu der zweiten Seitenfläche zu. Die spezifische Absorptionsrate nimmt vorteilhafterweise kontinuierlich, insbesondere konstant, von der ersten Seitenfläche zu der zweiten Seitenfläche zu.

In einer weiteren Ausführungsform weist die Schicht einen ersten Folienabschnitt und wenigstens einen an den ersten Folienabschnitt angrenzenden zweiten Folienabschnitt auf. Der erste Folienabschnitt und der zweite Folienabschnitt sind schichtartig ausgebildet und weisen jeweils das erste Matrixmaterial auf. In dem ersten Folienabschnitt ist in das erste Matrixmaterial das erste Partikelmaterial mit der ersten Partikelkonzentration eingebettet. In dem zweiten Folienabschnitt ist in das erste Matrixmaterial das erste Partikelmaterial mit einer zweiten Partikelkonzentration eingebettet. Das erste Partikelmaterial ist ausgebildet ist, einen ersten Anteil der über die erste Seitenfläche in den ersten Folienabschnitt einleitbaren elektromagnetischen Strahlung zu absorbieren und in Wärme umzuwandeln. Das erste Matrixmaterial des ersten Folienabschnitts ist ausgebildet, bei Erwärmung oberhalb einer vordefinierten Schrumpftemperatur zu schrumpfen. Das erste Partikelmaterial des zweiten Folienabschnitts ist ausgebildet, einen zweiten Anteil der über die erste Seitenfläche in den zweiten Folienabschnitt einleitbaren elektromagnetischen Strahlung in Wärme umzuwandeln, wobei das erste Matrixmaterial des zweiten Folienabschnitts ausgebildet ist, bei Erwärmung oberhalb der vordefinierten Schrumpftemperatur zu schrumpfen. Die erste Partikelkonzentration und die zweite Partikelkonzentration sind vorzugsweise derart gewählt, dass eine Erwärmung der Folienabschnitte zumindest abschnittsweise im Wesentlichen identisch ist.

In einer weiteren Ausführungsform ist im ersten Folienabschnitt die erste Partikelkonzentration geringer ist als die zweite Partikelkonzentration im zweiten Folienabschnitt.
Eine Schrumpffolie weist eine Schicht auf, wobei sich die Schicht zwischen einer ersten Seitenfläche und einer zweiten Seitenfläche erstreckt. Die Schicht weist ein erstes Matrixmaterial auf. Die Schicht weist einen ersten Folienabschnitt und wenigstens einen an den ersten Folienabschnitt angrenzenden zweiten Folienabschnitt auf, wobei der erste Folienabschnitt auf dem zweiten Folienabschnitt ausgebildet ist und sich der erste Folienabschnitt an die erste Seitenfläche anschließt. Dadurch ist der zweite Folienabschnitt beabstandet zu der ersten Seitenfläche hin zu der zweiten Seitenfläche versetzt angeordnet. Der erste Folienabschnitt und der zweite Folienabschnitt sind schichtartig ausgebildet und weisen jeweils das erste Matrixmaterial auf. Im ersten Folienabschnitt in das erste Matrixmaterial ist ein erstes Partikelmaterial eingebettet und im zweiten Folienabschnitt in das erste Matrixmaterial ist ein weiteres Partikelmaterial eingebettet. Das erste Partikelmaterial und das weitere Partikelmaterial weisen einen unterschiedlichen Werkstoff auf und die Werkstoffe des ersten und weiteren Partikelmaterials weisen ein unterschiedliches Absorptionsverhalten zueinander auf. Das erste Partikelmaterial kann beispielsweise die Schrumpffolie mit einer ersten Farbe und das weitere Partikelmaterial kann eine zur ersten Farbe unterschiedliche zweite Farbe aufweisen.

Auch mit dieser Ausgestaltung kann eine gleichmäßige Erwärmung der Schrumpffolie erzielt werden, sodass Hot-Spots, insbesondere nahe der ersten Seitenfläche oder an der ersten Seitenfläche vermieden werden. Dadurch wird eine thermische Zerstörung des ersten Matrixmaterials verhindert.

In einer weiteren Ausführungsform ist das erste Partikelmaterial ausgebildet, einen ersten Anteil einer elektromagnetischen Strahlung mit einem Wellenlängenbereich der über die erste Seitenfläche in den ersten Folienabschnitt einleitbaren elektromagnetischen Strahlung und das weitere Partikelmaterial des zweiten Folienabschnitts ist ausgebildet, einen dritten Anteil einer elektromagnetischen Strahlung mit einem weiteren Wellenlängenbereich der über die erste Seitenfläche in den zweiten Folienabschnitt einleitbaren elektromagnetischen Strahlung zu absorbieren und in Wärme umzuwandeln. Der Wellenlängenbereich ist unterschiedlich zu dem weiteren Wellenlängenbereich. Vorzugsweise weist der Wellenlängenbereich vorzugsweise einen vordefinierten Abstand zu dem weiteren Wellenlängenbereich auf.

Der erste Anteil der absorbierten elektromagnetischen Strahlung erwärmt das erste Matrixmaterial in dem ersten Folienabschnitt. Der dritte Anteil der elektromagnetischen Strahlung durchdringt den ersten Folienabschnitt im Wesentlichen ohne im ersten Folienabschnitt absorbiert zu werden. Durch die Absorption des dritten Anteils im zweiten Folienabschnitt erwärmt der dritte Anteil das erste Matrixmaterial des zweiten Folienabschnitts. Dadurch kann durch die Wahl des unterschiedlichen Partikelmaterials die Erwärmung der Schicht gezielt eingestellt werden. Auch hierbei bildet sich bei Bestrahlung ein vordefiniertes Temperaturprofil aus, das vorteilhafterweise gleichmäßig ist. Dies bedeutet, dass das erste Matrixmaterial des ersten Folienabschnitts eine im Wesentlichen gleiche Temperatur aufweist, wie das erste Matrixmaterial des zweiten Folienabschnitts.

In einer weiteren Ausführungsform ist angrenzend an die zweite Seitenfläche eine Reflexionsschicht angeordnet. Die Reflexionsschicht ist ausgebildet, einen Restanteil der durch die Schicht gedrungenen elektromagnetischen Strahlung zumindest teilweise zurück in die Schicht zu reflektieren. Dadurch kann ein Energieinhalt der elektromagnetischen Strahlung besonders gering gewählt werden, sodass eine Strahlenquelle, die die elektromagnetische Strahlung bereitstellt, mit besonders niedriger Leistung betrieben werden kann.

In einer weiteren Ausführungsform ist angrenzend an die zweite Seitenfläche eine Klebschicht an der Schicht angeordnet. Die Klebschicht ist mit der Schicht verbunden. Die Klebschicht weist ein zweites Matrixmaterial auf. In dem zweiten Matrixmaterial ist das erste Partikelmaterial mit einer zweiten Partikelkonzentration in einem vordefinierten weiteren Wellenlängenbereich eingebettet. Die zweite Partikelkonzentration des zweiten Partikelmaterials in dem zweiten Matrixmaterial ist größer ist als die erste Partikelkonzentration in der Schicht.

In einer weiteren Ausführungsform ist eine maximale spezifische Absorptionsrate der elektromagnetischen Strahlung des zweiten Partikelmaterials in der Klebschicht größer als eine maximale spezifische Absorptionsrate der elektromagnetischen Strahlung in der Schicht.

In einer weiteren Ausführungsform ist das erste Matrixmaterial transparent oder teiltransparent. Dadurch wird eine ungewollte Absorption der elektrischen Strahlung durch das Matrixmaterial vermieden.

Ein Schrumpfschlauch weist eine schlauchförmig geformte Schrumpffolie, die wie oben beschrieben ausgebildet ist, auf. Die erste Seitenfläche ist dabei zu einer Umgebung hin zugewandt. Die zweite Seitenfläche begrenzt einen Innenraum. In dem Innenraum ist wenigstens eine elektrische Komponente anordenbar. Diese Ausgestaltung hat den Vorteil, dass mittels des Schrumpfschlauchs besonders einfach elektrische Komponenten gegenüber der Umgebung geschützt werden können. Ferner kann mittels der oben beschriebenen Schrumpffolie der Schrumpfschlauch besonders einfach auf die elektrische Komponente aufgeschrumpft werden.

Ein besonders gutes System kann dadurch bereitgestellt werden, dass das System eine Schrumpffolie, wenigstens eine elektrische Komponente und eine Strahlenquelle aufweist, wobei die Schrumpffolie wie oben beschrieben ausgebildet ist. Die Strahlenquelle ist ausgebildet, eine elektromagnetische Strahlung bereitzustellen. Die Schrumpffolie bedeckt zumindest abschnittsweise die elektrische Komponente. Dabei ist die zweite Seitenfläche auf einer der elektrischen Komponente zugewandten Seite angeordnet. Die erste Seitenfläche ist auf einer der Strahlenquelle zugewandten Seite angeordnet. Die elektromagnetische Strahlung ist auf die erste Seitenfläche gerichtet und dringt durch die erste Seitenfläche in die Schicht ein. Das erste Matrixmaterial ist ausgebildet, unter Wärmeeinwirkung zu schrumpfen.

Diese Ausgestaltung hat den Vorteil, dass besonders einfach und schnell die elektrische Komponente mit der Schrumpffolie eingeschrumpft werden kann. Dadurch kann die elektrische Komponente besonders einfach und kostengünstig gegenüber der Umgebung geschützt werden. Mittels der elektromagnetischen Strahlung, die durch die Strahlenquelle bereitgestellt wird, erfolgt das Einschrumpfen besonders schnell, vorzugsweise innerhalb weniger Sekunden (unter 2 Sekunden).

Besonders vorteilhaft ist, wenn zum Betrieb des oben beschriebenen Systems das folgende Verfahren angewendet wird. Dabei wird eine elektromagnetische Strahlung über die erste Seitenfläche in die Schrumpffolie eingeleitet. Die elektromagnetische Strahlung dringt über die erste Seitenfläche in die Schicht ein und ist in Richtung der zweiten Seitenfläche gerichtet. Das erste Partikelmaterial absorbiert die elektromagnetische Strahlung zumindest teilweise und wandelt zumindest teilweise die elektromagnetische Strahlung in Wärme um. Mittels der Wärme wird das erste Matrixmaterial über eine Schrumpftemperatur erwärmt. Das erste Matrixmaterial schrumpft in zumindest eine Erstreckungsrichtung senkrecht zu der ersten Seitenfläche.

Von besonderem Vorteil ist, wenn durch die zunehmende erste Partikelkonzentration der elektromagnetischen Strahlung die vom ersten Partikelmaterial absorbierte elektromagnetische Strahlung über die Eindringtiefe im Wesentlichen konstant ist. Dadurch kann eine gleichmäßige Erwärmung des ersten Matrixmaterials sichergestellt werden.

Nachfolgend wird die Erfindung anhand von Figuren näher erläutert. Dabei zeigen:
Figur 1 eine Draufsicht auf ein System mit einer Anordnung mit einem Schrumpfschlauch gemäß einer ersten Ausführungsform;
Figur 2 eine Schnittansicht entlang einer in Figur 1 gezeigten Schnittebene A-A durch den in Figur 1 gezeigten Schrumpfschlauch;
Figur 3 ein Diagramm einer Absorptionsrate T der elektromagnetischen Strahlung in Prozent durch das erste Matrixmaterial aufgetragen über einer Wellenlänge der in das erste Matrixmaterial eindringenden elektromagnetischen Strahlung;
Figur 4 ein Ablaufdiagramm eines Verfahrens zur Herstellung der in den Figuren 1 und 2 gezeigten Anordnung;
Figur 5 einen Ausschnitt einer Abwicklung des in Figur 2 gezeigten Schrumpfschlauchs;
Figur 5A ein Temperaturprofil der in Figur 5 gezeigten Abwicklung;
Figur 6 einen Ausschnitt einer Abwicklung eines Schrumpfschlauchs gemäß einer zweiten Ausführungsform;
Figur 7 eine Abwicklung eines Ausschnitts eines Schrumpfschlauchs gemäß einer dritten Ausführungsform;
Figur 8 einen Ausschnitt einer Abwicklung eines Schrumpfschlauchs gemäß einer fünften Ausführungsform; und
Figur 9 einen Ausschnitt einer Abwicklung eines Schrumpfschlauchs gemäß einer fünften Ausführungsform.

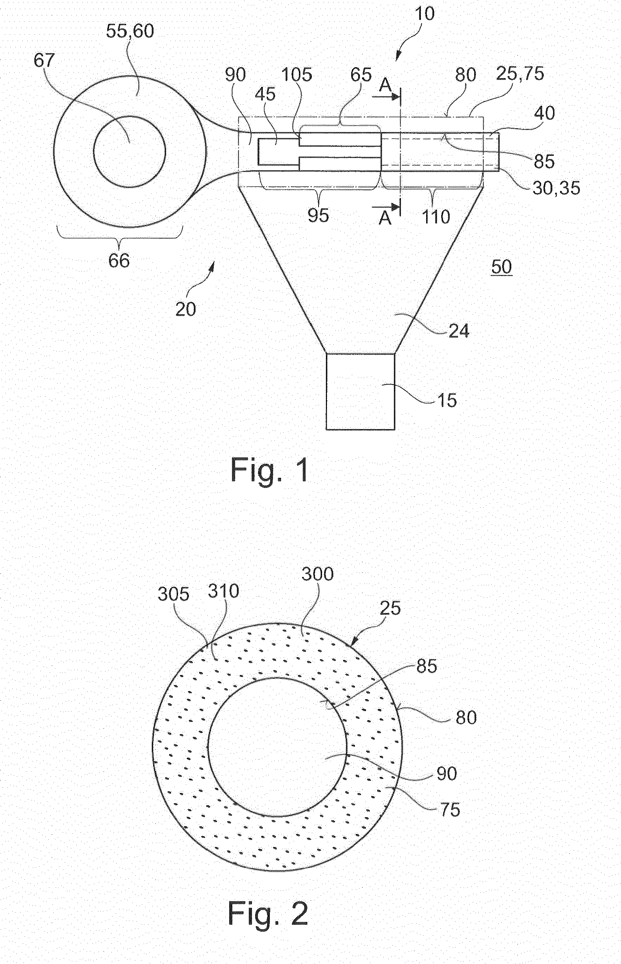

Figur 1 zeigt eine perspektivische Darstellung eines Systems 10.
Das System 10 weist eine Strahlenquelle 15 und eine Anordnung 20 auf.

Die Anordnung 20 weist einen Schrumpfschlauch 25 (in Figur 1 strichpunktiert dargestellt) gemäß einer ersten Ausführungsform und wenigstens eine erste elektrische Komponente 30 auf. Die erste elektrische Komponente 30 ist in der Ausführungsform beispielhaft als elektrische Leitung 35 ausgebildet. Die elektrische Leitung 35 umfasst eine Ummantelung 40 und einen elektrischen Leiter 45. Der elektrische Leiter 45 weist einen elektrisch leitfähigen Werkstoff auf. Die Ummantelung 40 ummantelt umfangsseitig den elektrischen Leiter 45 und isoliert den elektrischen Leiter 45 gegenüber einer Umgebung 50. Ferner schützt die Ummantelung 40 den elektrischen Leiter 45 vor Umwelteinflüssen, insbesondere vor korrosiven Medien, beispielsweise Flüssigkeiten, und/oder mechanischer Beschädigung. Die elektrische Leitung 35 weist einen Endabschnitt 95 auf.

Der Endabschnitt 95 schließt sich an ein stirnseitiges Ende des elektrischen Leiters 45 an. An dem Endabschnitt 95 ist die Ummantelung 40 entfernt. Ein Abschnitt 110 der Ummantelung 40 schließt sich auf einer zum stirnseitigen Ende des elektrischen Leiters 45 abgewandten Seite an den Endabschnitt 95 an. Im Abschnitt 110 ist ferner die Ummantelung 40 durch den Schrumpfschlauch 25 außenseitig bedeckt.

Zusätzlich kann die Anordnung 20 eine zweite elektrische Komponente 55 aufweisen. Die zweite elektrische Komponente 55 ist in der Ausführungsform beispielhaft als Kontakteinrichtung 60, insbesondere als Kabelschuh ausgebildet, wobei die Kontakteinrichtung 60 einen Anschlussabschnitt 65 und einen Kontaktabschnitt 66 umfasst. Der Anschlussabschnitt 65 ist mit dem Kontaktabschnitt 66 verbunden. Der Kontaktabschnitt 66 weist eine Öffnung 67 zur Befestigung der Kontakteinrichtung 60 an einer weiteren Kontakteinrichtung (nicht dargestellt) auf.

Der Endabschnitt 95 ist elektrisch und mechanisch mittels einer Verbindung 105 mit den Anschlussabschnitt 65 verbunden. Die Verbindung 105 kann beispielsweise als Crimpverbindung oder als Lötverbindung ausgebildet sein. Auch sind andere Verbindungen 105 zur elektrischen Verbindung des Endabschnitts 95 mit dem Anschlussabschnitt 65 denkbar.
Die zweite elektrische Komponente 55 kann beispielsweise auch als zweite elektrische Leitung oder als elektrische und/oder elektronische Schaltung ausgebildet sein. Auch eine andere Ausgestaltung der zweiten elektrischen Komponente 55 ist denkbar. Insbesondere ist auch denkbar, dass die Anordnung 20 als Durchgangsspleiße ausgebildet ist.

Der Schrumpfschlauch 25 umfasst eine Schrumpffolie 75. Die Schrumpffolie 75 weist einen nach außen hin zur Umgebung 50 hingewandte erste Seitenfläche 80 und eine innenseitig des Schrumpfschlauchs 25 angeordnete zweite Seitenfläche 85 auf. Mit der zweiten Seitenfläche 85 begrenzt der Schrumpfschlauch 25 einen Innenraum 90. In dem Innenraum 90 ist zumindest der Endabschnitt 95 des elektrischen Leiters 45 und der Anschlussabschnitt 65 angeordnet.
Die Schrumpffolie 75 des Schrumpfschlauchs 25 bedeckt den Endabschnitt 95 und den Anschlussabschnitt 65 und schützt diese gegenüber der Umgebung 50. In endmontiertem Zustand der Anordnung 20 ist die Schrumpffolie 75 geschrumpft und weist zumindest in eine Erstreckungsrichtung, beispielsweise senkrecht zu der ersten Seitenfläche 80, eine geringere Erstreckung auf als in einem vormontierten (ungeschrumpften) (Ursprungs-)Zustand.

Die Strahlenquelle 15 ist beabstandet zu der Anordnung 20 angeordnet. Die Strahlenquelle 15 ist ausgebildet, eine elektromagnetische Strahlung 24 bereitzustellen. Die elektromagnetische Strahlung 24 ist großflächig auf die Schrumpffolie 75 gerichtet. Es können auch mehrere Strahlenquellen 15 vorgesehen sein, um allseitig den Schrumpfschlauch 25 mit elektromagnetischer Strahlung 24 zeitgleich bestrahlen zu können.

Die elektromagnetische Strahlung 24 weist vorzugsweise wenigstens eine Wellenlänge aus einem ersten Wellenlängenbereich des Lichtsauf. Die Strahlenquelle 15 kann beispielsweise als Infrarotstrahler, Halogenstrahler oder Laser ausgebildet sein.

Um die Schrumpffolie 75 zu schrumpfen, wird die Schrumpffolie 75 oberhalb einer vordefinierten Schrumpftemperatur mittels der elektromagnetischen Strahlung 24 erwärmt. Oberhalb der vordefinierten Schrumpftemperatur schrumpft bzw. zieht sich die Schrumpffolie 75 in zumindest eine Erstreckungsrichtung der Schrumpffolie 75 zusammen. Dabei legt sich die Schrumpffolie 75 innenseitig an die im Innenraum 90 angeordneten elektrischen Komponenten 30, 55 an. Der Schrumpfschlauch 25 ist in Längsrichtung der ersten elektrischen Komponente 30 derart ausgebildet, dass der Schrumpfschlauch 25 zusätzlich auch den an den Endabschnitt 95 angrenzenden Abschnitt 110 der Ummantelung 40 umfangsseitig bedeckt

Figur 2 zeigt eine Schnittansicht entlang einer in Figur 1 gezeigten Schnittebene A-A durch den in Figur 1 gezeigten Schrumpfschlauch 25.

Der Schrumpfschlauch 25 weist die Schrumpffolie 75 auf. Die Schrumpffolie 75 ist röhrenförmig zu dem Schrumpfschlauch 25 geformt und begrenzt mit der zweiten Seitenfläche 85 den Innenraum 90. Die Schrumpffolie 75 kann aber auch andersartig ausgebildet sein. So kann beispielsweise die Schrumpffolie 75 bandförmig oder plattenförmig ausgebildet sein und beispielsweise um die elektrische Komponente 30, 55 gewickelt sein. Auch sind andere Ausgestaltungen der Schrumpffolie 75 denkbar.

Die Schrumpffolie 75 weist in der Ausführungsform nur eine Schicht 300 auf. Die Schicht 300 erstreckt sich somit zwischen der ersten Seitenfläche 80 und der zweiten Seitenfläche 85. Die Schicht 300 weist ein erstes Matrixmaterial 305 und ein erstes Partikelmaterial 310 auf.

Das erste Partikelmaterial 310 ist in dem ersten Matrixmaterial 305 eingebettet. Dabei weist vorzugsweise das erste Matrixmaterial 305 wenigstens einen der folgenden ersten Werkstoffe auf: Polyolefin (PEX), Polyester (PES), Fluorpolymer (FPM), Polyvinylidenfluorid (PVDF) oder Polytetrafluorethylen (PTFE), strahlenvernetzes Polyolefin. Das erste Partikelmaterial 310 weist wenigstens einen der folgenden zweiten Werkstoffe auf: Farbpigmente, Titanoxid, Chromtitan, Mischmetalloxid, Ruß. Das erste Partikelmaterial kann auch derart gewählt sein, dass es Licht aus dem nichtsichtbaren Bereich des Lichts absorbiert.. Von besonderem Vorteil ist hierbei, wenn das erste Partikelmaterial 310 eine Größe von 0,1 nm bis 100 µm aufweist. Je nach Wahl des zweiten Werkstoffs des ersten Partikelmaterials 310 kann die Schicht 300 durch das erste Partikelmaterial 310 farblich eingefärbt sein. Vorzugsweise sind Partikelmaterialien zu wählen deren Absorption an die Strahlquelle angepasst sind.

Eine Partikelkonzentration des ersten Partikelmaterials 310 ist in dem ersten Matrixmaterial 305 derart gewählt, dass die Partikelkonzentration des ersten Partikelmaterials 310 von der ersten Seitenfläche 80 hin zu der zweiten Seitenfläche 85 zunimmt. Von besonderem Vorteil ist hierbei, wenn eine Partikelkonzentration des ersten Partikelmaterials 310 von der ersten Seitenfläche 80 hin zu der zweiten Seitenfläche 85 zunimmt so das pro Tiefeneinheit die gleiche Menge Energie absorbiert wird. Die Zunahme kann beispielsweise stetig sein. Insbesondere kann die erste Partikelkonzentration konstant oder gemäß einer e-Funktion zunehmen. Die Schicht 300 kann selbst beispielsweise eine Dicke von 400 µm bis 2000 µm aufweisen.

Die Schrumpffolie 75 kann beispielsweise dadurch hergestellt werden, dass vor und/oder während des Aushärtens des ersten Matrixmaterials 305 das erste Partikelmaterial 310 in Richtung der zweiten Seitenfläche 85 beispielsweise durch Sedimentation konzentriert wird.

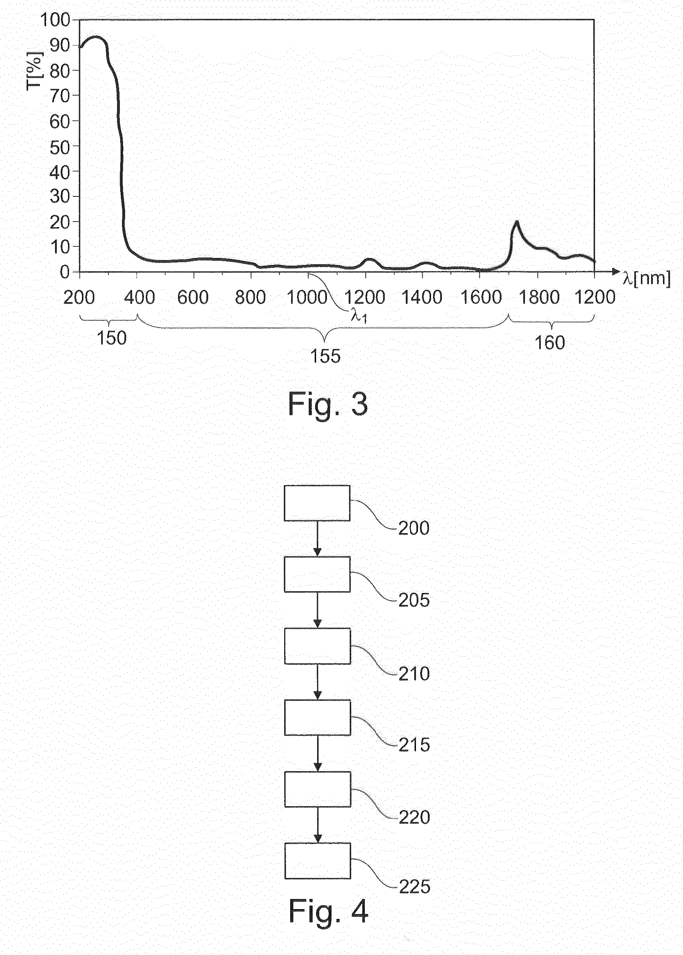

Figur 3 zeigt in einem Diagramm einen Graphen einer Absorptionsrate T der elektromagnetischen Strahlung 24 in Prozent in dem ersten Matrixmaterial 305 aufgetragen über einer Wellenlänge λ der in das erste Matrixmaterial 305 eindringenden elektromagnetischen Strahlung 24.

Das Diagramm ist beispielhaft für den ersten Werkstoff des ersten Matrixmaterials 305. Wird in einer alternativen Ausführungsform ein anderer erster Werkstoff für das erste Matrixmaterial 305 gewählt, so weist das erste Matrixmaterial 305 einen anderen Verlauf der Absorptionsrate T über der Wellenlänge λ auf.

In einem zweiten Wellenlängenbereich 150, der in Figur 3 zwischen 200 nm und 370 nm liegt, wird die elektromagnetische Strahlung 24 durch das erste Matrixmaterial 305 im Wesentlichen absorbiert, sodass das erste Matrixmaterial 305 im zweiten Wellenlängenbereich 150 intransparent ist.

In einem dritten Wellenlängenbereich 155, der oberhalb angrenzend an den zweiten Wellenlängenbereich 150 sich anschließt, ist das erste Matrixmaterial 305 transparent und absorbiert nur einen geringen Anteil kleiner 10 Prozent der elektromagnetischen Strahlung 24. Dabei wird unter Transparenz verstanden, wenn wenigstens 90 Prozent der über die erste Seitenfläche 80 eindringenden elektromagnetischen Strahlung 24 wieder an der zweiten Seitenfläche 85 aus dem ersten Matrixmaterial 305 austritt bzw. weniger als 10 Prozent der elektromagnetischen Strahlung 24 in dem ersten Matrixmaterial 305 absorbiert wird.

Oberhalb des dritten Wellenlängenbereichs 155 schließt sich ein vierter Wellenlängenbereich 160 an, in dem das erste Matrixmaterial 305 zwischen 10 und 20 Prozent absorbiert. In dem vierten Wellenlängenbereich 160 ist das erste Matrixmaterial 305 teiltransparent. Dabei wird unter teiltransparent verstanden, dass (sofern kein erstes Partikelmaterial 310 in dem ersten Matrixmaterial 305 eingebettet ist) wenigstens 80 Prozent und weniger als 90 Prozent der auf die erste Seitenfläche 80 treffenden elektromagnetischen Strahlung 24 an der zweiten Seitenfläche 85 wieder aus dem ersten Matrixmaterial 305 austritt bzw. zwischen 10 und 20 Prozent der elektromagnetischen Strahlung 24 in dem ersten Matrixmaterial 305 absorbiert wird.

In der Ausführungsform ist das erste Matrixmaterial 305 und der erste Wellenlängenbereich der elektromagnetischen Strahlung 24 derart gewählt, dass das erste Matrixmaterial 305 im Wesentlichen transparent oder zumindest teiltransparent ausgebildet ist. Von besonderem Vorteil ist, wenn das erste Matrixmaterial 305 transparent ausgebildet ist.

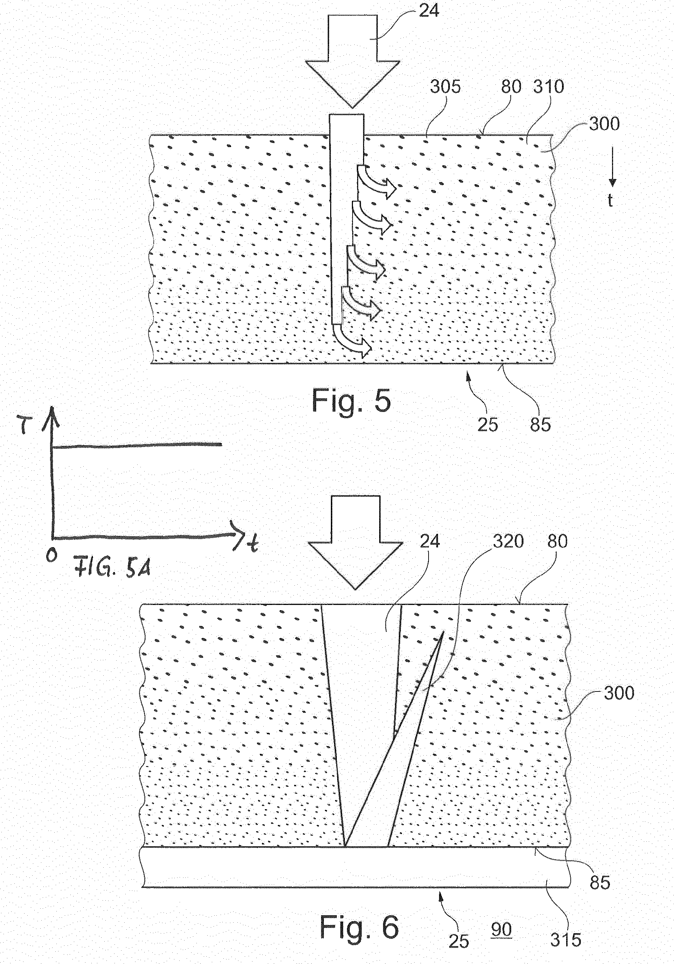

Figur 4 zeigt ein Ablaufdiagramm eines Verfahrens zur Herstellung der in Figur 1 gezeigten Anordnung 20. Figur 5 zeigt einen Ausschnitt einer Abwicklung des in Figur 2 gezeigten Schrumpfschlauchs 25 während eines fünften Verfahrensschritts 220. Figur 5A zeigt ein Temperaturprofil der in Figur 5 gezeigten Abwicklung.

In einem ersten Verfahrensschritt 200 werden der Schrumpfschlauch 25, die erste elektrische Komponente 30 und die zweite elektrische Komponente 55 bereitgestellt. Dabei ist in der Ausführungsform am Endabschnitt 95 bereits die Ummantelung 40 entfernt. Der Schrumpfschlauch 25 wird in seinem Ursprungszustand bereitgestellt. Im Ursprungszustand ist der Schrumpfschlauch 25 aufgeweitet und ist nicht geschrumpft.

In einem zweiten Verfahrensschritt 205, der auf den ersten Verfahrensschritt 200 folgt, wird der Schrumpfschlauch 25 auf eine der beiden elektrischen Komponenten 30, 55 aufgefädelt.

In einem dritten Verfahrensschritt 210, der auf den zweiten Verfahrensschritt 205 folgt, werden der Endabschnitt 95 und der Anschlussabschnitt 65 miteinander mittels der Verbindung 105 verbunden. Dies kann beispielsweise durch ein Crimpen oder Löten erfolgen. Auch kann der dritte Verfahrensschritt 210 vor dem zweiten Verfahrensschritt 205 durchgeführt werden.

In einem vierten Verfahrensschritt 215, der auf den dritten Verfahrensschritt 210 folgt, wird der Schrumpfschlauch 25 derart positioniert, dass der Schrumpfschlauch 25 den Endabschnitt 95 und den Anschlussabschnitt 65 vollständig bedeckt. Zusätzlich kann der Schrumpfschlauch 25 auch derartig positioniert sein, dass der Abschnitt 110 im Innenraum 90 angeordnet ist.

In einem fünften Verfahrensschritt 220, der auf den vierten Verfahrensschritt 215 folgt, wird die Strahlenquelle 15 aktiviert und die elektromagnetische Strahlung 24 auf die erste Seitenfläche 80 des Schrumpfschlauchs 25 gerichtet.

Die elektromagnetische Strahlung 24 ist derart auf das erste Matrixmaterial 305 abgestimmt, dass das erste Matrixmaterial 305 für den ersten Wellenlängenbereich der elektromagnetischen Strahlung 24 transparent oder teiltransparent ist. Bezogen auf Figur 4 umfasst der erste Wellenlängenbereich der elektromagnetischen Strahlung 24 der Strahlenquelle 15 dem dritten Wellenlängenbereich 155 und/oder dem vierten Wellenlängenbereich 160.

Die elektromagnetische Strahlung 24 wird auf die erste Seitenfläche 80 gerichtet und dringt über die erste Seitenfläche 80 in die Schicht 300 ein.

Die elektromagnetische Strahlung 24 kann dabei das erste Matrixmaterial 305 durch die transparente Ausgestaltung des ersten Matrixmaterials 305 durchdringen. Das erste Partikelmaterial 310, das in dem ersten Matrixmaterial 305 eingebettet ist, ist zu dem ersten Wellenlängenbereich derart gewählt, dass es intransparent ist und überwiegend die elektromagnetische Strahlung 24 absorbiert. Eine spezifische Absorptionsrate der elektromagnetischen Strahlung 24 in der Schicht 300 wird im Wesentlichen durch die erste Partikelkonzentration des ersten Partikelmaterials 310 in der Schicht 300 festgelegt.

Dabei nimmt mit einer zunehmenden Eindringtiefe t, die in der Ausführungsform senkrecht zu der ersten Seitenfläche 80 hin zu der zweiten Seitenfläche 85 zunimmt, die erste Partikelkonzentration des ersten Partikelmaterials 310 in dem ersten Matrixmaterial 305 zu. Dies bewirkt, dass die spezifische Absorptionsrate der elektromagnetischen Strahlung 24 in der Schrumpffolie 75 mit zunehmender Eindringtiefe t zunimmt. Da jedoch mit zunehmender Eindringtiefe t und durch die Absorption der elektromagnetischen Strahlung 24 durch das erste Partikelmaterial 310 die elektromagnetische Strahlung 24 in ihrer Intensität in der Schicht 300 abgeschwächt wird, bewirkt die zunehmende erste Partikelkonzentration (und damit auch die zunehmende Absorptionsrate) des ersten Partikelmaterials 310 mit zunehmender Eindringtiefe t hierfür einen Ausgleich, sodass eine gleichmäßige Absorption der elektromagnetischen Strahlung 24 in der Schicht 300 über die Eindringtiefe t erfolgt.
Von besonderem Vorteil ist, wenn über die Eindringtiefe t das erste Partikelmaterial 310 derart verteilt ist, dass die Absorption der elektromagnetischen Strahlung 24 über die Eindringtiefe t im Wesentlichen konstant ist.

Bei der Absorption der elektromagnetischen Strahlung 24 wird die elektromagnetische Strahlung 24 in der Schrumpffolie 75 in Wärme umgewandelt, die die Schrumpffolie 75 erwärmt. Die zunehmende erste Partikelkonzentration bewirkt somit eine gleichmäßige Erwärmung der Schicht 300 über die Eindringtiefe t. Von besonderem Vorteil ist hierbei, wenn die erste Partikelkonzentration und/oder die Absorptionsrate kontinuierlich, insbesondere konstant oder gemäß einer e-Funktion, zwischen der ersten Seitenfläche 80 und der zweiten Seitenfläche 85 zunimmt, sodass die Erwärmung der Schicht 300 über die Eindringtiefe t konstant ist.

Dadurch weist bei Bestrahlung die Schrumpffolie 75 ein definiertes Temperaturprofil (vgl. Figur 5A) auf, das besonders gleichmäßig ist. Das Temperaturprofil zeigt einen weiteren Graphen einer Temperatur T des ersten Matrixmaterials 300 über der Eindringtiefe t.

Idealerweise ist das Temperaturprofil derart ausgebildet, dass die Temperatur T des ersten Matrixmaterials 305 über die Eindringtiefe t im Wesentlichen identisch (konstant) ist.

Wird die Schrumpffolie 75 oberhalb einer vordefinierten Schrumpftemperatur, beispielsweise 120 °C, erwärmt, so schrumpft die Schrumpffolie 75 und zieht sich in mindestens eine Schrumpfrichtung zusammen. Dabei reduziert sich in der Ausführungsform ein maximaler Innendurchmesser des Innenraums 90. Die Schrumpffolie 75 schrumpft dabei derart, dass sich die Schrumpffolie 75 innen mit der zweiten Seitenfläche 85 an den Anschlussabschnitt 65 und der elektrischen Leitung 35 anlegt.

Die gleichmäßige Erwärmung der Schicht 300 bewirkt dabei, dass die Schrumpfung über die Eindringtiefe t gleichmäßig erfolgt. Dadurch kann ein Verbrennen oder Hot-Spot, zum Beispiel insbesondere an der Oberfläche des ersten Matrixmaterials 305 an der ersten Seitenfläche 80, zuverlässig vermieden werden. Ferner wird sichergestellt, dass auch das tieferliegende erste Matrixmaterial 305 über die Schrumpftemperatur erwärmt wird und so auch an der zweiten Seitenfläche 85 eine Schrumpfung erfolgt. Ferner kann durch die gleichmäßige Absorption der elektromagnetischen Strahlung 24 ein besonders schnelles Erwärmen der Schrumpffolie 75 sichergestellt werden. Dadurch kann die Zeitdauer für den fünften Verfahrensschritt 220 besonders gering gehalten werden und somit innerhalb weniger Sekunden der Schrumpfschlauch 25 auf die elektrischen Komponenten 30, 55 aufgeschrumpft werden.

In einem sechsten Verfahrensschritt 225, der auf den fünften Verfahrensschritt 220 folgt, wird die Anordnung 20 entnommen und abgekühlt.

Figur 6 zeigt einen Ausschnitt einer Abwicklung eines Schrumpfschlauchs 25 gemäß einer zweiten Ausführungsform.

Der Schrumpfschlauch 25 ist im Wesentlichen identisch zu dem in den Figuren 1, 2 und 5 erläuterten Schrumpfschlauch 25 ausgebildet. Im Folgenden wird nur ausschließlich auf die Unterschiede des in Figur 6 gezeigten Schrumpfschlauchs 25 gegenüber dem in den Figuren 1, 2 und 5 gezeigten Schrumpfschlauch 25 eingegangen.

Der Schrumpfschlauch 25 weist zusätzlich eine Reflexionsschicht 315 auf. Die Reflexionsschicht 315 ist dünner ausgebildet als die Schicht 300. Die Reflexionsschicht 315 ist unterseitig auf einer zum Innenraum 90 zugewandten Seite an der zweiten Seitenfläche 85 direkt angeordnet. Die Reflexionsschicht 315 reflektiert die bis zur zweiten Seitenfläche 85 durch die Schicht 300 gedrungene elektromagnetische Strahlung 24 zurück in die Schicht 300. Eine reflektierte elektromagnetische Strahlung 320 durchdringt die Schicht 300 abermals von der zweiten Seitenfläche 85 wieder zurück in Richtung der ersten Seitenfläche 80. Dies hat den Vorteil, dass die reflektierte elektromagnetische Strahlung 320 durch das erste Partikelmaterial 310 auf dem Weg von der zweiten Seitenfläche 85 zu der ersten Seitenfläche 80 absorbiert werden kann, sodass die Schicht 300 sich besonders schnell mittels der elektromagnetischen Strahlung 24 erwärmt.

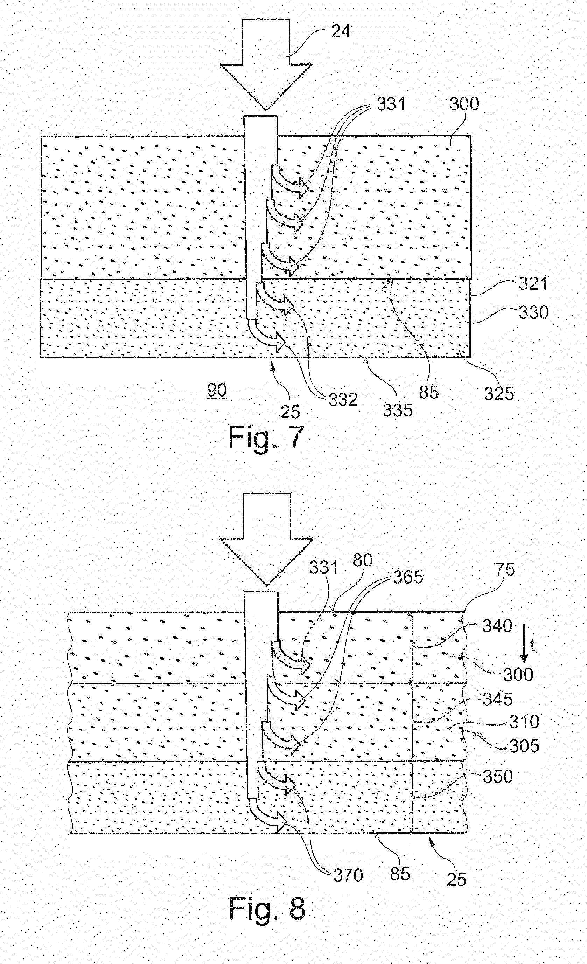

Figur 7 zeigt eine Abwicklung eines Ausschnitts eines Schrumpfschlauchs 25 gemäß einer dritten Ausführungsform.

Der Schrumpfschlauch 25 ist im Wesentlichen identisch zu dem in den Figuren 1, 2 und 5 gezeigten Schrumpfschlauch 25 ausgebildet. Im Folgenden wird ausschließlich auf die Unterschiede des in Figur 7 gezeigten Schrumpfschlauchs 25 gegenüber dem in den Figuren 1, 2 und 5 gezeigten Schrumpfschlauch 25 eingegangen.

Der in Figur 7 gezeigte Schrumpfschlauch 25 weist zusätzlich zu der in den Figuren 1, 2 und 5 gezeigten Schicht 300 eine an der zweiten Seitenfläche 85 angeordnete Klebschicht 321 auf. Die Klebschicht 321 schließt sich innenseitig an die zweite Seitenfläche 85 an. Auf einer zur zweiten Seitenfläche 85 abgewandten Seite weist die Klebschicht 321 eine dritte Seitenfläche 335 auf, die innenseitig den Innenraum 90 begrenzt. Mit der dritten Seitenfläche 335 liegt der Schrumpfschlauch 25 in geschrumpften Zustand an der elektrischen Komponente 30, 55 an.

In der Ausführungsform ist die Klebschicht 321 dünner als die Schicht 300 ausgebildet. Selbstverständlich kann die Klebschicht 321 auch dicker ausgebildet sein. Auch kann in Umfangsrichtung die Klebschicht 321 nur partiell an der zweiten Seitenfläche 85 vorgesehen sein, das heißt, dass Teile der zweiten Seitenfläche 85 frei sind und nicht durch die Klebschicht 321 bedeckt sind.

Die Klebschicht 321 ist ausgebildet, den Schrumpfschlauch 25 innenseitig stoffschlüssig mit den im Innenraum 90 angeordneten elektrischen Komponenten 30, 55 zu verbinden.

Dadurch kann ein Verrutschen des Schrumpfschlauchs 25 in Längsrichtung der elektrischen Komponente 30, 55, zuverlässig vermieden werden. Die Klebschicht 321 kann zusätzlich eine Dichtfunktion übernehmen, sodass der Innenraum 90 fluiddicht gegenüber der Umgebung 55 abgedichtet ist.

Die Klebschicht 321 weist ein zweites Matrixmaterial 325 und ein zweites Partikelmaterial 330 auf. Das zweite Matrixmaterial 325 weist wenigstens Thermoplast als vierten Werkstoff auf. Das zweite Partikelmaterial 330 kann identisch zu dem ersten Partikelmaterial 310 der ersten Schicht 300 gewählt sein. Das zweite Partikelmaterial 330 kann aber auch unterschiedlich zu dem ersten Partikelmaterial 310 sein.

Von besonderem Vorteil ist, wenn das erste Partikelmaterial 310 der Schicht 300 eine besonders hohe erste Absorptionsrate im ersten Wellenlängenbereich der elektromagnetischen Strahlung 24 und das zweite Partikelmaterial 330 eine besonders hohe zweite Absorptionsrate in einem fünften Wellenlängenbereich der elektromagnetischen Strahlung 24 aufweist, wobei der fünfte Wellenlängenbereich unterschiedlich zu dem ersten Wellenlängenbereich ist. Von besonderem Vorteil ist hierbei, wenn der erste und fünfte Wellenlängenbereich wenigstens 10 nm Abstand bezogen auf eine jeweilige maximale Absorptionsrate des ersten Partikelmaterials 310 und des zweiten Partikelmaterials 330 zueinander aufweisen.

Die Strahlenquelle 15 ist derart ausgebildet, dass sie die elektromagnetische Strahlung 24 aus dem ersten Wellenlängenbereich und dem fünften Wellenlängenbereich bereitstellt.

Diese Ausgestaltung hat den Vorteil, dass ein erster Anteil 331 der elektromagnetischen Strahlung 24 in der Schicht 300 durch das erste Partikelmaterial 310 absorbiert und in Wärme zur Erwärmung des ersten Matrixmaterials 305 umgewandelt wird. Dadurch kann eine zuverlässige gleichmäßige Erwärmung der Schicht 300 sichergestellt werden. Die Schicht 300 ist bezogen auf den fünften Wellenlängenbereich transparent und im Wesentlichen durchlässig, sodass dadurch die elektromagnetische Strahlung 24 im fünften Wellenlängenbereich mit hoher Intensität bis zu der Klebschicht 321 die erste Schicht 300 durchdringen kann.

Dadurch, dass die Schicht 300 und das erste Partikelmaterial 310 zu dem ersten Wellenlängenbereich sowie das zweite Partikelmaterial 330 zu dem fünften Wellenlängenbereich zueinander abgestimmt sind und das erste Partikelmaterial 310 der Schicht 300 bei dem ersten Wellenlängenbereich ihre maximale Absorptionsrate aufweist, wird die elektromagnetische Strahlung 24 im Bereich des für das zweite Partikelmaterial 330 relevanten zweiten Wellenlängenbereichs kaum geschwächt oder nicht geschwächt.

In der Klebschicht 321 absorbiert das zweite Partikelmaterial 330 einen zweiten Anteil 332 der elektromagnetischen Strahlung 24 aus dem fünften Wellenlängenbereich und wandelt den zweiten Anteil 332 in Wärme zur Erwärmung des zweiten Matrixmaterials 325 um.

Diese Ausgestaltung hat den Vorteil, dass, wenn im fünften Verfahrensschritt 220 die elektromagnetische Strahlung 24 von der Strahlenquelle 15 bereitgestellt wird, die Schicht 300 und die Klebschicht 321 gleichmäßig erwärmt werden. Die Erwärmung führt dazu, dass sich die Schicht 300 zusammenzieht und schrumpft und gleichzeitig die Klebschicht 321 aufgeschmolzen wird, sodass sich die Klebschicht 321 stoffschlüssig mit der elektrischen Komponente 30, 55 verbinden kann. Durch das unterschiedliche erste und zweite Partikelmaterial 310, 330 für die Schicht 300 und die Klebschicht 321 kann auch die Klebschicht 321 in besonders kurzer Zeit, insbesondere in wenigen Sekunden, auf Schmelztemperatur des zweiten Matrixmaterials 325 gebracht werden kann, sodass das Verkleben des Schrumpfschlauchs 25 in besonders kurzer Zeit erfolgen kann. Die Schmelztemperatur des zweiten Matrixmaterials 325 und die Schrumpftemperatur des ersten Matrixmaterials 305 können unterschiedlich sein. Idealerweise sind sie im Wesentlichen identisch.

Figur 8 zeigt einen Ausschnitt einer Abwicklung eines Schrumpfschlauchs 25 gemäß einer fünften Ausführungsform.

Der Schrumpfschlauch 25 ist im Wesentlichen identisch zu dem in den Figuren 1, 2 und 4 gezeigten Schrumpfschlauch 25 ausgebildet. Im Folgenden wird ausschließlich nur auf die Unterschiede des in Figur 8 gezeigten Schrumpfschlauchs 25 eingegangen.

Die Schicht 300 ist in der Ausführungsform mehrteilig ausgebildet. Die Schicht 300 weist einen ersten Folienabschnitt 340, einen zweiten Folienabschnitt 345 und einen dritten Folienabschnitt 350 auf. Die Anzahl der Folienabschnitte 340, 345, 350 ist beispielhaft. Auch kann eine andere Anzahl von Folienabschnitten 340, 345, 350 gewählt werden. Der erste Folienabschnitt 340 grenzt oberseitig an die erste Seitenfläche 80 an. Auf einer zur ersten Seitenfläche 80 abgewandten Seite schließt sich direkt an den ersten Folienabschnitt 340 der zweite Folienabschnitt 345 an. Auf einer der ersten Seitenfläche 80 abgewandten Seite schließt sich direkt an den zweiten Folienabschnitt 345 der dritte Folienabschnitt 350 an. Der dritte Folienabschnitt 350 weist unterseitig die zweite Seitenfläche 85 auf.

Die Folienabschnitte 340, 345, 350 sind schichtartig ausgebildet und weisen beispielhaft im Wesentlichen die gleiche Dicke auf. Auch können die Folienabschnitte 340, 345, 350 eine unterschiedliche Dicke aufweisen. Die Folienabschnitte 340, 345, 350 sind in der Ausführungsform stoffschlüssig miteinander verbunden und weisen vorzugsweise das gleiche erste Matrixmaterial 305 auf. Auch ist denkbar, dass das Matrixmaterial 305, 325 jedes Folienabschnitts 340, 345, 350 unterschiedlich ist. Die Folienabschnitte 340, 345, 350 können beispielsweise in der Herstellung des Schrumpfschlauchs 25 separat extrudiert werden und beispielsweise miteinander laminiert werden oder sich während des Extrudierens aufeinanderlegen und sich stoffschlüssig miteinander verbinden.

Im ersten Folienabschnitt 340 ist in das erste Matrixmaterial 305 das erste Partikelmaterial 310 mit einer im Wesentlichen über die Eindringtiefe hinweg konstanten ersten Partikelkonzentration eingebettet. Im zweiten Folienabschnitt 345 weist die Schicht 300 eine zweite Partikelkonzentration des ersten Partikelmaterials 310 in dem ersten Matrixmaterial 305 auf, wobei die zweite Partikelkonzentration größer ist als die erste Partikelkonzentration. Auch die zweite Partikelkonzentration ist über die Tiefe im Wesentlichen beispielhaft konstant. Im dritten Folienabschnitt 350 weist das erste Partikelmaterial 310 in dem ersten Matrixmaterial 305 eine dritte Partikelkonzentration auf. Die dritte Partikelkonzentration ist größer als die erste und zweite Partikelkonzentration in den beiden übrigen Folienabschnitten 340, 345. Auch die dritte Partikelkonzentration ist über die Tiefe im Wesentlichen konstant. Somit nimmt die Partikelkonzentration von der ersten Seitenfläche 80 hin zur zweiten Seitenfläche 85 diskontinuierlich zu.

Die Wahl der ersten bis dritten Partikelkonzentration kann in ihrem Wert derart gewählt sein, dass die erste bis dritte Partikelkonzentration einer e-Funktion angenähert ist. Im ersten Folienabschnitt 340 wird der erste Anteil 331, im zweiten Folienabschnitt 345 ein dritter Anteil 365, im dritten Folienabschnitt 350 ein vierter Anteil 370 der elektromagnetischen Strahlung 24 zur Erwärmung des ersten Matrixmaterials 305 absorbiert, wobei der erste, dritte und vierte Anteil 331, 365, 370 im Wesentlichen gleich ist. Dadurch wird sichergestellt, dass die einzelnen Folienabschnitte 340, 345, 350 jeweils idealerweise gleich erwärmt werden. Das Temperaturprofil ist dadurch dem in Figur 5A gezeigten konstanten Verlauf idealerweise angenähert.

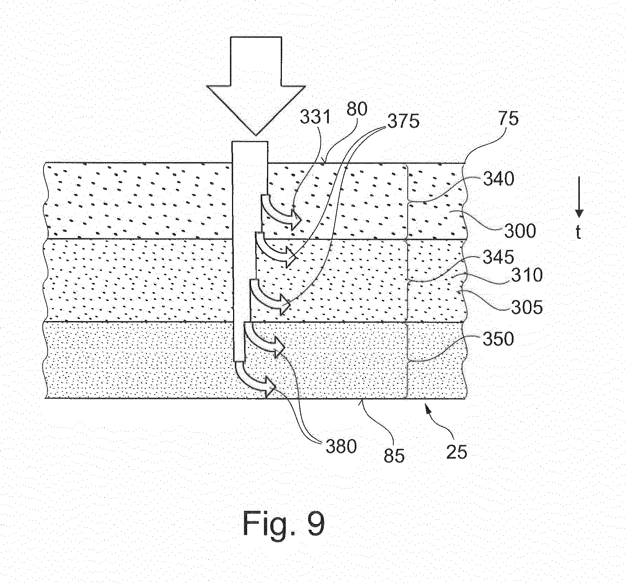

Figur 9 zeigt einen Ausschnitt einer Abwicklung eines Schrumpfschlauchs 25 gemäß einer fünften Ausführungsform.

Die in Figur 9 gezeigte Ausgestaltung des Schrumpfschlauchs 25 ist im Wesentlichen identisch zu dem in Figur 8 erläuterten Schrumpfschlauch 25, wobei im Folgenden nur auf die Unterschiede des in Figur 9 gezeigten Schrumpfschlauchs 25 gegenüber dem in Figur 8 gezeigten Schrumpfschlauch 25 eingegangen wird.

Im ersten Folienabschnitt 340 ist in das erste Matrixmaterial 305 das erste Partikelmaterial 310 mit der im Wesentlichen über die Eindringtiefe t hinweg im Wesentlichen konstanter erster Partikelkonzentration eingebettet. Auch kann die erste Partikelkonzentration über die Eindringtiefe t zunehmen. Im zweiten Folienabschnitt 345 weist die Schicht 300 ein drittes Partikelmaterial 355 mit einer fünften Partikelkonzentration auf. Das dritte Partikelmaterial 355 ist in dem ersten Matrixmaterial 305 eingebettet. Auch die fünfte Partikelkonzentration ist über die Eindringtiefe t im Wesentlichen beispielhaft konstant. Auch kann die fünfte Partikelkonzentration über die Eindringtiefe t zunehmen.

Im dritten Folienabschnitt 350 weist die Schicht 300 neben dem ersten Matrixmaterial 305 ein viertes Partikelmaterial 360 mit einer sechsten Partikelkonzentration auf. Das vierte Partikelmaterial 360 ist in dem ersten Matrixmaterial 305 eingebettet. Die sechste Partikelkonzentration kann unabhängig zu der ersten Partikelkonzentration oder der dritten Partikelkonzentration gewählt sein. Auch die sechste Partikelkonzentration ist über die Eindringtiefe t im Wesentlichen konstant. Auch kann die sechste Partikelkonzentration über die Eindringtiefe t zunehmen.

Das dritte Partikelmaterial 355 und das vierte Partikelmaterial 360 weisen einen unterschiedlichen Werkstoff zueinander und zu dem ersten Partikelmaterial 310 auf. Von besonderem Vorteil ist, wenn das dritte Partikelmaterial 355 eine besonders hohe Absorptionsrate bei einer elektromagnetischen Strahlung 24 aus einem fünften Wellenlängenbereich und das vierte Partikelmaterial 360 eine besonders hohe Absorptionsrate bei der elektromagnetischen Strahlung 24 aus einem fünften Wellenlängenbereich aufweist, wobei der fünfte und sechste Wellenlängenbereich unterschiedlich zueinander zu dem ersten Wellenlängenbereich gewählt sind und im Bereich des Lichts liegen. Von besonderem Vorteil ist hierbei, wenn der erste, fünfte und sechste Wellenlängenbereich wenigstens 50 nm Abstand, bezogen auf eine jeweilige maximale Absorptionsrate des ersten Partikelmaterials 310 und des vierten Partikelmaterials 360 und des fünften Partikelmaterials, zueinander aufweisen. Die Strahlenquelle 15 ist derart ausgebildet, dass sie die elektromagnetische Strahlung 24 zumindest mit dem ersten, fünften und sechsten Wellenlängenbereich bereitstellt.

Wird im fünften Verfahrensschritt 220 die elektromagnetische Strahlung 24 auf den Schrumpfschlauch 25 gerichtet, so wird der erste Anteil 331 der elektromagnetische Strahlung 24 mit dem ersten Wellenlängenbereich im ersten Folienabschnitt 340 absorbiert und in Wärme umgewandelt. Das erste Partikelmaterial 310 ist so gewählt, dass es den fünften und sechsten Wellenlängenbereich der elektromagnetischen Strahlung 24 nicht absorbiert. Im zweiten Folienabschnitt 345 absorbiert das dritte Partikelmaterial 355 einen fünften Anteil 375 der elektromagnetischen Strahlung 24. Das dritte Partikelmaterial 355 ist derart zu dem vierten Partikelmaterial 360 gewählt, dass das dritte Partikelmaterial 355 elektromagnetische Strahlung 24 aus dem sechsten Wellenlängenbereich nicht absorbiert.

Im dritten Folienabschnitt 350 absorbiert das vierte Partikelmaterial 360 einen sechsten Anteil 380 der elektromagnetischen Strahlung 24 mit dem sechsten Wellenlängenbereich und wandelt die elektromagnetische Strahlung 24 in Wärme zur Erwärmung des ersten Matrixmaterials 305 des dritten Folienabschnitts 350 um.

Dadurch wird eine im Wesentlichen gleichmäßige Erwärmung der Schrumpffolie 75 über die Eindringtiefe t hinweg sichergestellt.

Es wird darauf hingewiesen, dass die in den Figuren 1 bis 9 gezeigte Ausgestaltung des Schrumpfschlauchs 25 sowie der Anordnung 20 und des Systems 10 beispielhaft ist. Selbstverständlich ist auch denkbar, dass der Schrumpfschlauch 25 andersartig ausgebildet ist. Insbesondere ist hierbei denkbar, dass auf den Schrumpfschlauch 25 verzichtet wird und anstelle des Schrumpfschlauchs 25 nur die Schrumpffolie 75 wie oben erläutert ausgebildet ist. Dadurch wird auch bei einer planen Ausgestaltung oder gewölbten Ausgestaltung der Schrumpffolie 75 ein zuverlässiges Zusammenziehen der Schrumpffolie 75 sicher gewährleistet. Ferner wird vermieden, dass die Schrumpffolie 75 lokal überhitzt oder ein lokales Schrumpfen nicht eintritt, da lokal die Schrumpftemperatur der Schrumpffolie 75 nicht erreicht wird. Auch können die verschiedenen Ausführungsformen miteinander kombiniert werden. Insbesondere können die in den Figuren 8 und 9 gezeigten Ausführungsformen die Reflexionsschicht 315 oder die Klebschicht 321 aufweisen.

### Bezugszeichenliste

- 10: System
- 15: Strahlenquelle
- 20: Anordnung
- 24: elektromagnetische Strahlung
- 25: Schrumpfschlauch
- 30: erste elektrische Komponente
- 35: elektrische Leitung
- 40: Ummantelung
- 45: elektrischer Leiter
- 50: Umgebung
- 55: zweite elektrische Komponente
- 60: Kontakteinrichtung
- 65: Anschlussabschnitt
- 66: Kontaktabschnitt
- 67: Öffnung
- 75: Schrumpffolie
- 80: erste Seitenfläche
- 85: zweite Seitenfläche
- 90: Innenraum
- 95: Endabschnitt (der elektrischen Leitung)
- 105: Verbindung
- 110: Abschnitt (Ummantelung)
- 115: zweiter Abschnitt der zweiten elektrischen Leitung

- 150: zweiter Wellenlängenbereich
- 155: dritter Wellenlängenbereich
- 160: vierter Wellenlängenbereich

- 200: erster Verfahrensschritt
- 205: zweiter Verfahrensschritt
- 210: dritter Verfahrensschritt
- 215: vierter Verfahrensschritt
- 220: fünfter Verfahrensschritt
- 225: sechster Verfahrensschritt
- 300: Schicht
- 305: erstes Matrixmaterial
- 310: erstes Partikelmaterial
- 315: Reflexionsschicht
- 320: reflektierte elektromagnetische Strahlung
- 321: Klebschicht
- 325: zweites Matrixmaterial
- 330: zweites Partikelmaterial
- 331: erster Anteil (der elektromagnetischen Strahlung)
- 332: zweiter Anteil (der elektromagnetischen Strahlung)
- 335: dritte Seitenfläche
- 340: erster Folienabschnitt
- 345: zweiter Folienabschnitt
- 350: dritter Folienabschnitt
- 355: drittes Partikelmaterial
- 360: viertes Partikelmaterial
- 365: dritter Anteil (der elektromagnetischen Strahlung)
- 370: vierter Anteil (der elektromagnetischen Strahlung)
- 375: fünfter Anteil (der elektromagnetischen Strahlung)
- 380: sechster Anteil (der elektromagnetischen Strahlung)

## Patentansprüche

1. Schrumpffolie (75),
- aufweisend eine Schicht (300)
- wobei sich die Schicht (300) zwischen einer ersten Seitenfläche (80) und einer zweiten Seitenfläche (85) erstreckt,
- wobei die Schicht (300) ein erstes Matrixmaterial (305) und wenigstens ein in das erste Matrixmaterial (305) eingebettetes erstes Partikelmaterial (310) aufweist,
- wobei das erste Partikelmaterial (310) ausgebildet ist, eine über die erste Seitenfläche (80) in die Schicht (300) einleitbare elektromagnetische Strahlung (24) zur Erwärmung des ersten Matrixmaterials (305) oberhalb einer Schrumpftemperatur zu absorbieren,
**dadurch gekennzeichnet, dass**
- eine erste Partikelkonzentration des ersten Partikelmaterials (310) in dem ersten Matrixmaterial (305) zwischen der ersten Seitenfläche (80) und der zweiten Seitenfläche (85) unterschiedlich ist.

2. Schrumpffolie (75) nach Anspruch 1,
- wobei die erste Partikelkonzentration des ersten Partikelmaterials (310) in dem ersten Matrixmaterial (305) von der ersten Seitenfläche (80) hin zu der zweiten Seitenfläche (85) zunimmt.

3. Schrumpffolie (75) nach Anspruch 1 oder 2,
- wobei die erste Partikelkonzentration des ersten Partikelmaterials (310) in dem ersten Matrixmaterial (305) von der ersten Seitenfläche (80) hin zu der zweiten Seitenfläche (85) stetig, vorzugsweise mit einer vordefinierten Funktion, zunimmt.

4. Schrumpffolie (75) nach einem der vorhergehenden Ansprüche,
- wobei eine spezifische Absorptionsrate der über die erste Seitenfläche (80) in die Schrumpffolie (75) einleitbaren elektromagnetischen Strahlung (24) in der Schicht (300) von der ersten Seitenfläche (80) zu der zweiten Seitenfläche (85), vorteilhafterweise kontinuierlich, insbesondere konstant oder gemäß einer e-Funktion, zunimmt.

5. Schrumpffolie (75) nach einem der vorhergehenden Ansprüche,
- wobei die Schicht (300) einen ersten Folienabschnitt (340) und wenigstens einen an den ersten Folienabschnitt (340) angrenzenden zweiten Folienabschnitt (345)aufweist,
- wobei der erste Folienabschnitt (340) und der zweite Folienabschnitt (345) schichtartig ausgebildet sind und jeweils das erste Matrixmaterial (305) aufweisen,
- wobei im ersten Folienabschnitt (340) in das erste Matrixmaterial (305) das erstes Partikelmaterial (310) mit der ersten Partikelkonzentration eingebettet ist,
- wobei im zweiten Folienabschnitt (345) in das erste Matrixmaterial (305) das erste Partikelmaterial (310) mit einer zweiten Partikelkonzentration eingebettet ist,
- wobei das erste Partikelmaterial (310) ausgebildet ist, einen ersten Anteil (331) der über die erste Seitenfläche (80) in den ersten Folienabschnitt (340) einleitbaren elektromagnetischen Strahlung (24) zu absorbieren und in Wärme umzuwandeln,
- wobei das erste Matrixmaterial (305) des ersten Folienabschnitts (340) ausgebildet ist, bei Erwärmung oberhalb einer vordefinierten Schrumpftemperatur zu schrumpfen,
- wobei das erste Partikelmaterial (310) des zweiten Folienabschnitts (345) ausgebildet ist, einen zweiten Anteil (332) der über die erste Seitenfläche (80) in den zweiten Folienabschnitt (345) einleitbaren elektromagnetischen Strahlung (24) in Wärme umzuwandeln,
- wobei das erste Matrixmaterial (305) des zweiten Folienabschnitts (345) ausgebildet ist, bei Erwärmung oberhalb der vordefinierten Schrumpftemperatur zu schrumpfen,
- wobei vorzugsweise die erste Partikelkonzentration und die zweite Partikelkonzentration derart gewählt sind, dass eine Erwärmung der Folienabschnitte (340, 345) zumindest abschnittsweise im Wesentlichen identisch ist.

6. Schrumpffolie (75) nach Anspruch 5,
- wobei im ersten Folienabschnitt (340) die erste Partikelkonzentration geringer ist als die zweite Partikelkonzentration im zweiten Folienabschnitt (345) .

7. Schrumpffolie (75)
- aufweisend eine Schicht (300)
- wobei sich die Schicht (300) zwischen einer ersten Seitenfläche (80) und einer zweiten Seitenfläche (85) erstreckt,
- wobei die Schicht (300) ein erstes Matrixmaterial (305) aufweist,
- wobei die Schicht (300) einen ersten Folienabschnitt (340) und wenigstens einen an den ersten Folienabschnitt (340) angrenzenden zweiten Folienabschnitt (345) aufweist,
- wobei der erste Folienabschnitt (340) auf dem zweiten Folienabschnitt (345) ausgebildet ist und sich an die erste Seitenfläche (80) anschließt,
- wobei der erste Folienabschnitt (340) und der zweite Folienabschnitt (345) schichtartig ausgebildet sind und jeweils das erste Matrixmaterial (305) aufweisen,
- wobei im ersten Folienabschnitt (340) in das erste Matrixmaterial (305) ein erstes Partikelmaterial (310) eingebettet ist und im zweiten Folienabschnitt (345) in das erste Matrixmaterial (305) ein weiteres Partikelmaterial (330) eingebettet ist,
- wobei das erste Partikelmaterial (310) und das weitere Partikelmaterial (330) einen unterschiedlichen Werkstoff aufweisen und die Werkstoffe des ersten und weiteren Partikelmaterials (310, 330) unterschiedliche Absorptionsverhalten zueinander aufweisen.

8. Schrumpffolie nach Anspruch 7,
- wobei das erste Partikelmaterial (310) ausgebildet ist, einen ersten Anteil (331) einer elektromagnetischen Strahlung (24) mit einem Wellenlängenbereich der über die erste Seitenfläche (80) in den ersten Folienabschnitt (340) einleitbaren elektromagnetischen Strahlung (24) und das weitere Partikelmaterial (330) des zweiten Folienabschnitts (345) ausgebildet ist, einen dritten Anteil (365) einer elektromagnetischen Strahlung (24) mit einem weiteren Wellenlängenbereich der über die erste Seitenfläche (80) in den zweiten Folienabschnitt (345) einleitbaren elektromagnetischen Strahlung (24) zu absorbieren und in Wärme umzuwandeln,
- wobei der Wellenlängenbereich unterschiedlich zu dem weiteren Wellenlängenbereich ist,
- wobei vorzugsweise der Wellenlängenbereich vorzugsweise einen vordefinierten Abstand zu dem weiteren Wellenlängenbereich aufweist.

9. Schrumpffolie (75) nach einem der vorhergehenden Ansprüche,
- wobei angrenzend an die zweite Seitenfläche (85) eine Reflexionsschicht (315) angeordnet ist,
- wobei die Reflexionsschicht (315) ausgebildet ist, einen Restanteil der durch die Schicht (300) gedrungenen elektromagnetischen Strahlung (24) zumindest teilweise zurück in die Schicht (300) zu reflektieren.

10. Schrumpffolie (75) nach einem der Ansprüche 1 bis 9,
- wobei angrenzend an die zweite Seitenfläche (85) eine Klebschicht (321) an der Schicht (300) angeordnet ist,
- wobei die Klebschicht (321) mit der Schicht (300) verbunden ist,
- wobei die Klebschicht (321) ein zweites Matrixmaterial (325) aufweist,
- wobei in dem zweiten Matrixmaterial (325) das erste Partikelmaterial (310) mit einer zweiten Partikelkonzentration in einem vordefinierten weiteren Wellenlängenbereich eingebettet ist,
- wobei die zweite Partikelkonzentration des zweiten Partikelmaterials (330) in dem zweiten Matrixmaterial (325) größer ist als die erste Partikelkonzentration in der Schicht (300).

11. Schrumpffolie (75) nach Anspruch 10,
- wobei eine maximale spezifische Absorptionsrate der elektromagnetischen Strahlung (24) des zweiten Partikelmaterials (330) in der Klebschicht (321) größer ist als eine maximale spezifische Absorptionsrate der elektromagnetischen Strahlung (24) in der Schicht (300).

12. Schrumpffolie (75) nach einem der vorhergehenden Ansprüche,
- wobei das erste Matrixmaterial (305) transparent oder teiltransparent ist.

13. Schrumpfschlauch (25),
- aufweisend eine schlauchförmig geformte Schrumpffolie (75) nach einem der vorhergehenden Ansprüche,
- wobei die erste Seitenfläche (80) zu einer Umgebung (50) hin zugewandt ist,
- wobei die zweite Seitenfläche (85) einen Innenraum (90) begrenzt,
- wobei in dem Innenraum (90) wenigstens eine elektrische Komponente (30, 55) anordenbar ist.

14. System (10),
- aufweisend eine Schrumpffolie (75) nach einem der Ansprüche 1 bis 12, wenigstens eine elektrische Komponente (30, 55) und eine Strahlenquelle (15),
- wobei die Strahlenquelle (15) ausgebildet ist, eine elektromagnetische Strahlung (24) bereitzustellen,
- wobei die Schrumpffolie (75) zumindest abschnittsweise die elektrische Komponente (30, 55) bedeckt,
- wobei die zweite Seitenfläche (85) auf einer der elektrischen Komponente (30, 55) zugewandten Seite angeordnet ist,
- wobei die erste Seitenfläche (80) auf einer der Strahlenquelle (15) zugewandten Seite angeordnet ist,
- wobei die elektromagnetische Strahlung (24) auf die erste Seitenfläche (80) gerichtet ist und durch die erste Seitenfläche (80) in die Schicht (300) eindringt,
- wobei das erste Matrixmaterial (305) ausgebildet ist, unter Wärmeeinwirkung zu schrumpfen.

15. Verfahren zum Betrieb eines Systems (10) nach Anspruch 14,
- wobei eine elektromagnetische Strahlung (24) über die erste Seitenfläche (80) in die Schrumpffolie (75) eingeleitet wird,
- wobei die elektromagnetische Strahlung (24) über die erste Seitenfläche (80) in die Schicht (300) eindringt und in Richtung der zweiten Seitenfläche (85) gerichtet ist,
- wobei das erste Partikelmaterial (310) die elektromagnetische Strahlung (24) zumindest teilweise absorbiert und zumindest teilweise die elektromagnetische Strahlung (24) in Wärme umwandelt,
- wobei mittels der Wärme das erste Matrixmaterial (305) über eine Schrumpftemperatur erwärmt wird,
- wobei das erste Matrixmaterial (305) in zumindest eine Erstreckungsrichtung senkrecht zu der ersten Seitenfläche (80) schrumpft.
- wobei vorzugsweise durch die zunehmende erste Partikelkonzentration über eine Eindringtiefe (t) der elektromagnetischen Strahlung (24) die vom ersten Partikelmaterial (310) absorbierte elektromagnetische Strahlung (24) im Wesentlichen konstant ist.
